Europäisches Patentamt

European Patent Office

Office européen des brevets

(11) Veröffentlichungsnummer: **0 286 784**
A2

## EUROPÄISCHE PATENTANMELDUNG

(21) Anmeldenummer: 88101223.1

(51) Int. Cl.⁴: **B60R 13/10**

(22) Anmeldetag: 28.01.88

(30) Priorität: 06.04.87 DE 3711530

(43) Veröffentlichungstag der Anmeldung:
19.10.88 Patentblatt 88/42

(84) Benannte Vertragsstaaten:
AT BE CH DE ES FR GB GR IT LI LU NL SE

(71) Anmelder: Mauser, Siegfried
Alter Postplatz 11
D-7050 Waiblingen(DE)

(72) Erfinder: Mauser, Siegfried
Alter Postplatz 11
D-7050 Waiblingen(DE)

(74) Vertreter: Schuster, Gregor, Dipl.-Ing. et al
Patentanwälte Schuster & Thul
Wiederholdstrasse 10
D-7000 Stuttgart 1(DE)

(54) **Trägerrahmen für Auto-Nummern-Schilder.**

(57) Trägerrahmen (1) für Auto-Nummern-Schilder (2) mit einem einen profilierten Querschnitt aufweisenden Stützrahmen (4) der eine flächige, zur Aufnahme von Informationen dienende Verbreiterung auf der Ansichtseite hat und mit einer in der Farbe vom Stützrahmenmaterial abweichende Beschichtung (5) auf dem Stützrahmen (4), wobei entsprechend den darzustellenden Informationen in der Beschichtung (5) mindestens bis zum Stützrahmen (4) hin Ausnehmungen vorhanden sind.

FIG. 2

EP 0 286 784 A2

## Trägerrahmen für Auto-Nummern-Schilder

Die Erfindung geht aus von einem Trägerrahmen für Auto-Nummern-Schilder nach der Gattung des Hauptanspruchs. Mittels eines solchen Trägerrahmens der meist aus Kunststoff besteht, wird das Auto-Nummern-Schild am Kraftfahrzeug angebracht. Am Trägerrahmen sind zu dessen Befestigung am Kraftfahrzeug meist Laschen mit entsprechenden Bohrungen zur Aufnahme von Befestigungsschrauben vorgesehen. Der Trägerrahmen weist zudem um die erforderliche Stabilität zu erhalten, einen steifen Stützrahmen auf, der eine erforderliche Mindestdicke hat. wobei um Material zu sparen, dieser Rahmenquerschnitt profiliert ausgebildet ist. In diesem Profil können Nuten vorgesehen sein, in die das Nummernschild zu seiner Versteifung hineingeschoben wird. Die Befestigung des Nummernschildes am Rahmen kann aber auch durch andere Mittel erfolgen. In jedem Fall weist der Rahmen auf der Stirnseite, auf der auch das Nummernschild mit der Zulassungsnummer sichtbar ist, eine Verbreiterung auf, die für Werbezwecke nützbar ist. Diese Verbreiterung erstreckt sich vorzugsweise über einen ganzen Rahmenschenkel. Die dadurch gewonnene Fläche ist in der Größe oder auch Anordnung (vertikal, horizontal) der vorgesehenen Information, beispielsweise einer Werbung, angemessen, oder umgekehrt, die Fläche ist der Information angepasst. Üblicherweise wird die Information durch Aufdrucken von Schriften oder Zeichen auf diese beschichtete Rahmenfläche aufgebracht.

Die gattungsgemäße Beschichtung hat mehrere Gründe. Einerseits kann durch die Wahl eines edleren Beschichtungsmaterials beispielsweise mit Metalleffektcharakter der ästhetische Eindruck verbessert werden und oder ein Korrosionsschutz entstehen. Andererseits kann diese Beschichtung aus einem Material gewählt werden, das für den Werbeaufdruck besonders geeignet ist.

Für die Ausführung eines Aufdruckes auf derartige Trägerrahmen bestehen Voraussetzungen, wie beispielsweise das technische Vorbereiten des Druckstockes mit den Klischees sowie auch eine Einrichtung an der Druckerei maschine zum Positionieren des Trägerrahmens, die insgesamt sehr aufwendig sind und einen Werbedruck erst ab erheblichen Druckauflagen interessant machen.

Der erfindungsgemäße Trägerrahmen mit den kennzeichnenden Merkmalen des Hauptanspruchs hat demgegenüber die Vorteile, daß Werbe-oder Informationsdarstellungen besonders bei kleinen Auflagen kostenseitig interessant werden, daß diese Darstellungen außerordentlich haltbar sind - beispielsweise nicht abkratzbar sind - und daß diese am Trägerrahmen angebracht werden können, ohne daß dieser durch eine spezielle Einrichtung positioniert werden muß.

Natürlich ist auch eine Kombination von Aufdruck und Ausnehmung möglich, um so einen Großseriendruck neben einer individuellen Ergänzung zu ermöglichen.

Nach einer vorteilhaften Ausgestaltung der Erfindung gehen diese Ausnehmungen bis in das Material des Stützrahmens hinein wodurch optisch eine entsprechende Vergrößerung des andersfarbigen Bodens der Ausnehmung erzielt wird.

Nach einer weiteren vorteilhaften Ausgestaltung der Erfindung, besteht die Beschichtung aus einer Folie, beispielsweise einer metallbedampften Folie, die auf einen Kunststoffstützrahmen aufgebracht ist. Eine solche Folie kann bereits vor dem Aufbringen mit den Ausnehmungen versehen sein, indem diese beispielsweise eingestanzt werden. Nach einer anderen vorteilhaften Ausgestaltung der Erfindung kann diese Beschichtung aus einer Farbschicht bestehen, die beispielsweise durch Aufdampfen von Metall auf den Kunststoffrahmen vorgenommen wird oder durch Auflackieren eines entsprechenden Lackes.

Die Erfindung ist auch durch ein Herstellungsverfahren bestimmbar, zur optischen Darstellung von Informationen auf Trägerrahmen für Auto-Nummern-Schilder, die mit einer andersfarbigen Beschichtung versehen sind, bei dem die Beschichtung entsprechend der darzustellenden Informationen bis zum Trägerrahmen abgetragen wird. Dieses Abtragen kann durch Gravieren erfolgen. Um für die Bearbeitung des Rahmens die nötige Steifigkeit zu erhalten, ist nach einer weiteren Ausgestaltung der Erfindung eine in der Größe einem Nummerschild entsprechende in den Rahmen vor dem Graviervorgang einsetzbare Versteifungsplatte vorhanden, die in den Trägerrahmen eingeschoben wird, um durch diese Verbindung leichter und präziser gravieren zu können.

Weitere Vorteile und vorteilhafte Ausgestaltungen der Erfindung sind der nachfolgenden Beschreibung, der Zeichnung und den Ansprüchen entnehmbar.

Zeichnung

Ein Ausführungsbeispiel des Gegenstandes ist in der Zeichnung dargestellt und im folgenden näher beschrieben. Es zeigen:

Fig. 1 einen Trägerrahmen mit halb hereingeschobenem Nummernschild in der Ansicht und

Fig. 2 einen Schnitt nach Linie II-II in Fig. 1 in vergrößertem Maßstab.

Beschreibung des Ausführungsbeispiels

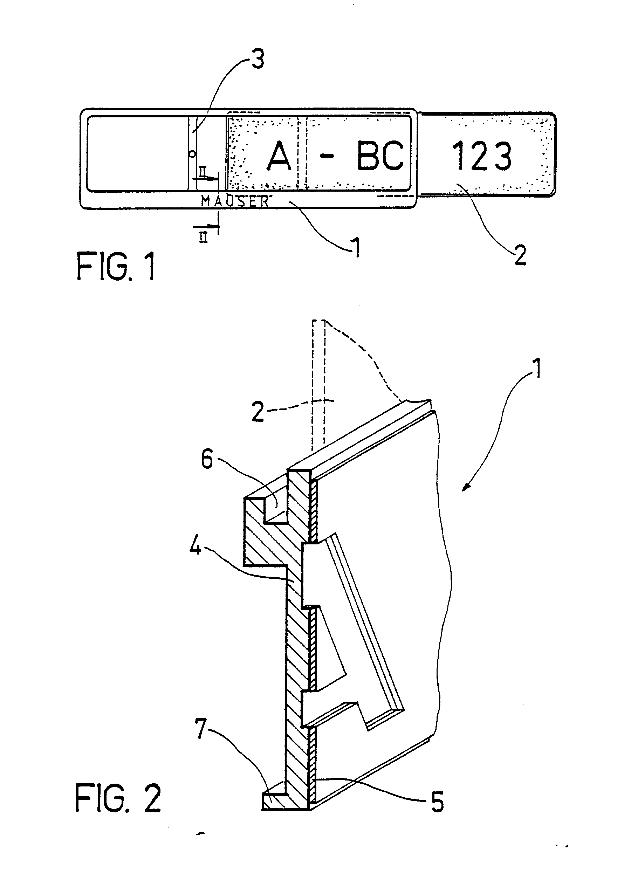

In Fig. 1 ist ein Trägerrahmen 1 dargestellt, in den ein Nummernschild 2 teilweise hineingeschoben ist und der zur Versteifung einen Steg 3 aufweist. Auf der "Blende" dieses Trägerrahmens 1 ist der Name "Mauser" eingraviert.

In Fig. 2 ist in vergrößertem Maßstab ein Schnitt durch den unteren Teil des Trägerrahmens 1 gezeigt entsprechend der Linie II-II in Fig. 1 und zwar gerade durch das A des Namens Mauser.

Wie Fig. 2 entnehmbar ist, setzt sich dieser Trägerrahmen 1 aus einem Stützrahmen 4 und einer darauf angebrachten Beschichtung 5 zusammen. Der Stützrahmen 4 weist einen profilierten Querschnitt auf mit einer Nut 6, in die das Nummernschild 2 schiebbar ist und mit Verstärkungsrändern 7 um so dem vorzugsweise aus Kunststoff bestehenden Stützrahmen 4 eine ausreichende Steifigkeit zu geben.

Die Beschichtung 5 ist um den Buchstaben A zu gewinnen durchgefräst, wobei der Fräser auch in das Material des Stützrahmens 4 graviert hat. Da das Material des Stützrahmens 4 andersfarbig ist als das der Beschichtung 5 begibt sich für die Ausnehmungen ein entsprechender hier das A hervorhebender Kontrast.

Alle in der Beschreibung den nachfolgenden Ansprüche und der Zeichnung dargestellten Merkmale können sowohl einzeln, als auch in beliebiger Kombination miteinander erfindungswesentlich sein.

## Ansprüche

1. Trägerrahmen für Auto-Nummern-Schilder mit einem einen profilierten Querschnitt aufweisenden Stützrahmen, mit einer auf der Ansichtseite mindestens abschnittweise vorhandenen flächigen Verbreiterung dieses Stützrahmens zur Aufnahme von Informationen und mit einer auf dieser flächigen Verbreiterung vorhandenen, in der Farbe von der des Stützrahmens abweichenden Beschichtung, dadurch gekennzeichnet, daß entsprechend der darzustellenden Informationen die Beschichtung (5) Ausnehmungen aufweist, welche die Beschichtung (5) bis zum andersfarbigen Stützrahmen (4) durchdringen.

2. Trägerrahmen nach Anspruch 1, dadurch gekennzeichnet, daß die Ausnehmungen bis in das Material des Stützrahmens (4) hinein gehen.

3. Trägerrahmen nach Anspruch 1 oder 2, dadurch gekennzeichnet, daß die Beschichtung (5) aus einer Folie besteht.

4. Trägerrahmen nach Anspruch 1 oder 2, dadurch gekennzeichnet, daß die Beschichtung (5) aus einer aufgedampften oder auflackierten Farbschicht besteht.

5. Verfahren zur optischen Darstellung von Informationen auf Trägerrahmen (1) für Auto-Nummern-Schilder (2), die mit einer andersfarbigen Beschichtung (5) versehen sind, dadurch gekennzeichnet, daß die Beschichtung (5) entsprechend der darzustellenden Informationen bis zum Trägerrahmen (1) abgetragen wird.

6. Verfahren nach Anspruch 5 dadurch gekennzeichnet, daß vor der Abtragung eine in der Größe einem Auto-Nummern-Schild entsprechende Versteifungsplatte in den Trägerrahmen (1, 4) eingesetzt wird.

FIG. 1

FIG. 2